# EUROPEAN PATENT SPECIFICATION

(11) **EP 2 572 252 B1**
(45) Date of publication and mention of the grant of the patent: **04.06.2014**
(21) Application number: 11710822.5
(22) Date of filing: 21.02.2011
(51) Int. Cl.: G05D 23/19, G01N 3/42, G01N 3/54

(54) **HEATING IN MATERIAL TESTING APPARATUS**
HEIZUNG IN EINEM MATERIALTESTGERÄT
CHAUFFAGE DANS UN APPAREIL D'ESSAI DES MATÉRIAUX

(30) Priority: 25.02.2010 GB 201003191
(43) Date of publication of application: 27.03.2013
(73) Proprietor: Micro Materials Ltd, Ellice Way, Wrexham LL13 7YL (GB)
(72) Inventor: SMITH, James, Frank, Ruthin LL15 2DE (GB); PICKFORD, Nicholas, Wrexham LL13 7YL (GB)
(74) Representative: Hamilton, Alistair
(86) International application number: PCT/GB2011/050331
(87) International publication number: WO 2011/104529

(56) References cited:
- WO-A1-00/04368
- JP-A- 2007 047 068
- US-A- 2 220 028
- US-A- 3 463 905

## Description

This invention relates to controlled heating in material testing apparatus. In particular, it relates to an assembly that is capable of maintaining a test probe and specimen at a constant, elevated temperature in apparatus for testing the surface and thin-film mechanical properties of materials on a small scale.

The small-scale surface mechanical properties of materials are of importance to engineers because such properties can be of significance for the performance of an engineered component on a macroscopic scale. For example, where components move over one another in a machine, the rate and manner in which those components wear, and their resistance to fatigue and fracture, may be largely determined by the microscopic surface properties of the components.

One type of testing to which the surface of components is subject involves applying a slowly increasing force to a test probe on the surface of a sample of a material and continuously monitoring displacement of the probe. Apparatus for performing such a test may comprise a pendulum rod upon which a probe is mounted and a sample holder for holding a sample to be tested in a position in which the probe can be brought into contact with it. Because this type of test occurs slowly, it is particularly susceptible to errors caused by thermal expansion or contraction due to non-intended temperature changes. Such testing at elevated temperatures has therefore been relatively difficult.

Another type of testing to which the surface of components is subject involves causing a force to repeatedly be applied to a test probe impacting a surface of a sample of a material. An example of such apparatus is disclosed in EP-A-1 095 254 of the present applicant. Apparatus for performing such a test may comprise a pendulum rod upon which a probe is mounted and a sample holder for holding a sample to be tested in a position in which the probe can be brought into contact with the sample.

The ability to make measurements of surface mechanical properties at elevated temperatures is an important advantage for material testing apparatus. This is because many mechanical properties are temperature-dependent, and many applications of materials to be tested do not take place at room temperature.

Previous test apparatus offered high temperature testing, in which the sample was heated and the test probe was not. To achieve reasonable accuracy this limited the technique to moderate temperatures and to samples of relatively low thermal conductivity. A test probe heater was subsequently developed. However, since test apparatus is required to measure displacements at the nanometre level, it is essential to minimise measurement artefacts that would occur as a result of poor temperature control, such as thermal expansion of the probe or sample.

Unlike the sample and its associated mounting stage, the test probe assembly has a very small thermal mass. This makes control of its temperature extremely difficult using a conventional closed-loop control system, especially at the highest temperatures (1000°C) at which measurements will typically be made. What tends to occur is that when cooling is detected and a small power increment is delivered to the probe heater to correct the temperature, its temperature will overshoot slightly which will cause the temperature of the probe to oscillate, with the result that the recorded probe displacement curve will contain 'wobbles.'

US-A-2 220 028 discloses an apparatus for controlling the power and temperature of furnaces. A thermocouple and relay cause periodic, cyclical variation of an EMF applied to a heating element to maintain the temperature of the furnace around a target temperature.

US-A-3 463 905 discloses a solid-state temperature control using a silicon-cotnrolled rectifier on alternate half-cycles until a temperature exceeds a first threshold and then on both half-cycles to cause the temperature to oscillate about a final desired temperature.

An aim of this invention is to provide test apparatus in which the probe can be maintained at a temperature that is nearer constant than is possible with known temperature control systems.

To this end, from a first aspect, the invention provides a method of controlling the temperature of a probe in materials testing apparatus as set forth in claim 1.

In the heating phase, the temperature of the probe is brought to a target temperature. It is then maintained at a steady temperature in the temperature maintenance phase, during which testing is carried out, so that its temperature does not cycle while measurements are made, thereby removing one potential source of inaccuracy in measurement.

The heating elements are most typically electrical heating elements.

In the heating phase, the energy is typically supplied to the heating elements at a high power level, that is, at a power level that is higher than the power required to maintain the probe at the target temperature. This ensures that the target temperature is reached rapidly.

The closed-loop temperature control method typically operates using feedback from a signal derived from a temperature detector to control power applied to the heating elements. It may be proportional-integral-derivative (PID) control, in which, within a proportional band, in which the applied power is proportional to the temperature error, and power is only fully off or fully on when the temperature falls above or below the proportional band. As a more basic alternative, the closed-loop temperature control may be on-off control, which operates in cycles in which energy is supplied to the heating elements until the probe reaches an upper threshold and energy is then removed from the elements until the probe cools to a lower threshold temperature. In this case, the target temperature is between the lower and the upper threshold temperatures.

Advantageously, the sample is contained within a space into which gas is introduced during testing. This can reduce or avoid oxidation of the sample during testing or allow testing in controlled atmospheres.

Embodiments of the invention may operate at a wide range of temperatures. Typically the range may be anywhere from ambient temperature up to 1000°C.

From another aspect, the invention provides materials testing apparatus as set forth in claim 8.

Typically, the heater includes a resistive heating coil disposed to apply heat to the probe. In normal use the apparatus will additionally include resistive heating coils disposed to apply heat to the sample. In such embodiments, the resistive heating coils disposed to apply heat to the sample may be carried within a thermal enclosure that can enclose a sample that is being tested. This feature may constitute a separate, independent inventive concept.

Testing apparatus, particularly but not exclusively embodying the invention may have a thermal enclosure that contains a sample being tested and a duct that passes into the thermal enclosure through which gas can be introduced into the thermal enclosure during testing operation of the apparatus. This feature may constitute a separate, independent inventive concept.

The apparatus may further include a support upon which a sample to be tested can be carried, the support being formed from a body of insulating material, such as a ceramic. The support may be held by insulating members, formed, for example, of fused silica, to improve its thermal isolation from other components of the apparatus, a feature that can be applied to any testing apparatus that can provide heat to a sample.

The apparatus preferably further includes cooling means disposed to resist transfer of heat from the hot zone to other parts of the apparatus, including deflection measurement components associated with the probe. Such cooling means may include a duct through which cooling fluid can flow to remove heat from the apparatus. There is also typically a heat shield to reduce radiative heat transfer from the hot zone to other components of the apparatus.

An embodiment of the invention will now be described in detail, by way of example, and with reference to the accompanying drawings, in which:
Figure 1 is a schematic side view of test apparatus embodying the invention;
Figure 2 is an enlarged side view of a probe assembly of the embodiment of Figure 1;

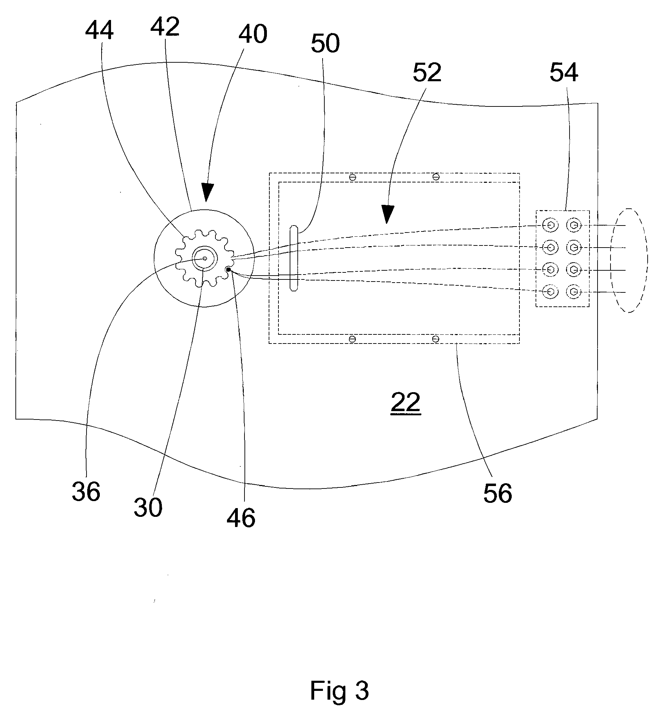

Figure 3 is an enlarged front view of a probe assembly of the embodiment of Figure 1 showing positioning of the probe power and thermocouple leads;
Figure 4 is a detailed view of a probe and associated heater assembly of the embodiment of Figure 1;

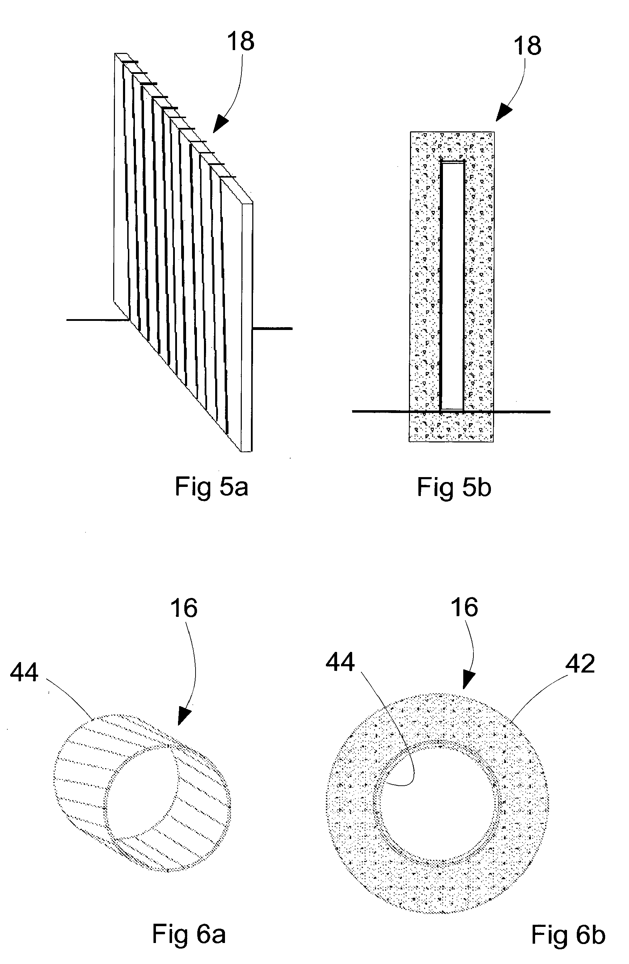

Figures 5a, and 5b show the construction of the heaters that are disposed below the sample of Figure 1;
Figures 6a and 6b show the construction of the heaters that are disposed surrounding the sample of Figure 1;
Figure 7 is a graph showing the variation in probe temperature with time during operation of an embodiment of the invention;
Figure 8 shows a modification to the embodiment of Figure 1; and
Figure 9 shows results of a surface test using an embodiment of the invention as compared with a tester that uses a conventional system for temperature control.

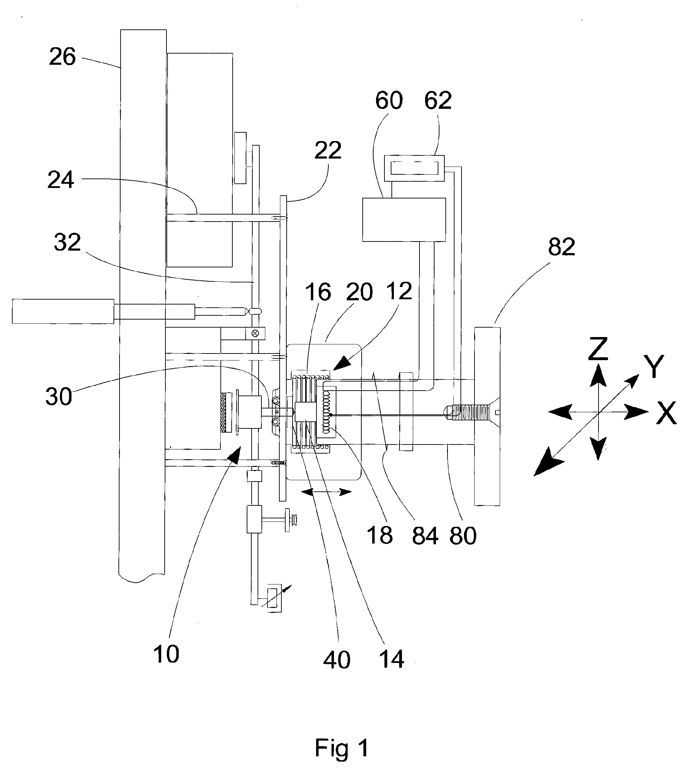

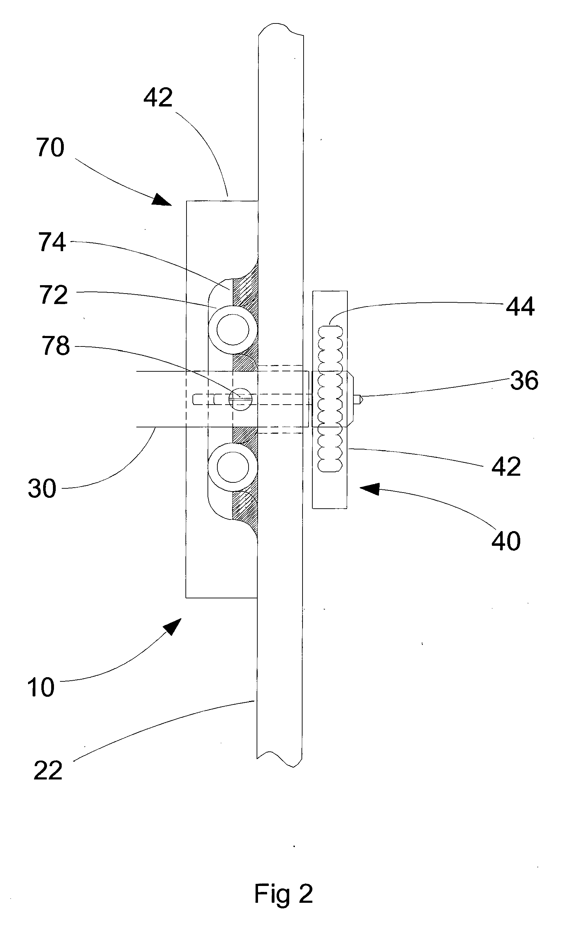

With reference to Figures 1 and 2, test apparatus embodying the invention comprises two main sub-assemblies: a pendulum that carries a probe assembly 10 and a sample carrier assembly 12 that carries a sample 14 to be tested on a support 80. The support 80 is connected to a mounting plate 82, which is a standard shape and size for connection with a conventional 3-axis stage. In this example, the sample is heated by electrically-operated resistive heating elements 16, 18. The carrier assembly 12 and the sample 14 are within a void formed within a ceramic, thermal enclosure 20 also carried on the support. The enclosure 20 can slide on the support 80 independently of the sample and the heating elements 16, 18 in a direction that is parallel to the motion of the carrier assembly 12.

In operation, the probe assembly is moved repeatedly with respect to a sample such that either the probe repeatedly impacts with the sample or such that the probe remains in contact with the sample and applies a cyclic load to it. The depth to which the probe penetrates the surface of the sample is measured and recorded, and that is then used together with knowledge of the applied force to determine surface properties of the material. That much is conventional and well known from past examples of surface testing apparatus of this general type, and will not be described further.

A heat shield 22 is provided between the heated components and the pendulum to isolate the heated components of the apparatus from the sensitive displacement measurement components. This is to avoid those components becoming excessively warm, and therefore changing their dimensions, since that would cause thermal drift in the measurement of probe displacement as a result of thermal expansion. In practice, of the displacement measurement components heating cannot be avoided entirely, but the aim is to keep such heating to a limit of a few degrees. The heat shield 22 comprises a plate that is carried on support members 24 that are secured to a chassis 26 of the apparatus. The plate extends in a plane that is normal to the direction of impact between the probe and the sample during testing. For the purposes of the following description, the side of the heat shield 22 that faces the sample will be referred to as the "hot side", while the opposite side, remote from the sample, will be referred to as the "cold side".

The thermal enclosure 20 can slide into contact with and be closed by the hot side of heat shield 22 during operation of the apparatus, where it is maintained by a compression spring 84. An end face of the thermal enclosure 20 contacts the heat 22 shield first, but the 3-axis stage continues to move the sample 14 until it makes contact with the probe 36. This contact causes the probe 36 to move. This movement is detected by depth-measurement apparatus associated with the probe 20, and once this happens, 3-axis stage is stopped. After the thermal enclosure 20 makes contact with the heat shield 22 and the specimen continues to move forward to make contact with the probe 36, the thermal enclosure 20 remains stationary, sliding over the support 80 and compressing the spring 84. This allows specimens of arbitrary thickness to be tested. To gain access to the sample 14, the thermal enclosure 20 can slide away from the heat shield.

An important aim of this arrangement is that the specimen 14 and the probe 36 are isothermal. This avoids or at least minimises a temperature gradient at the point of contact between the sample 14 and the probe 36. Such a gradient is undesirable since it causes heat flow, the rate of which flow varies as the contact area between the specimen 14 and the probe 36 may increases or decrease during testing. Without the sliding heater, the outer face of the sample 14 would typically be cooler than the probe 36.

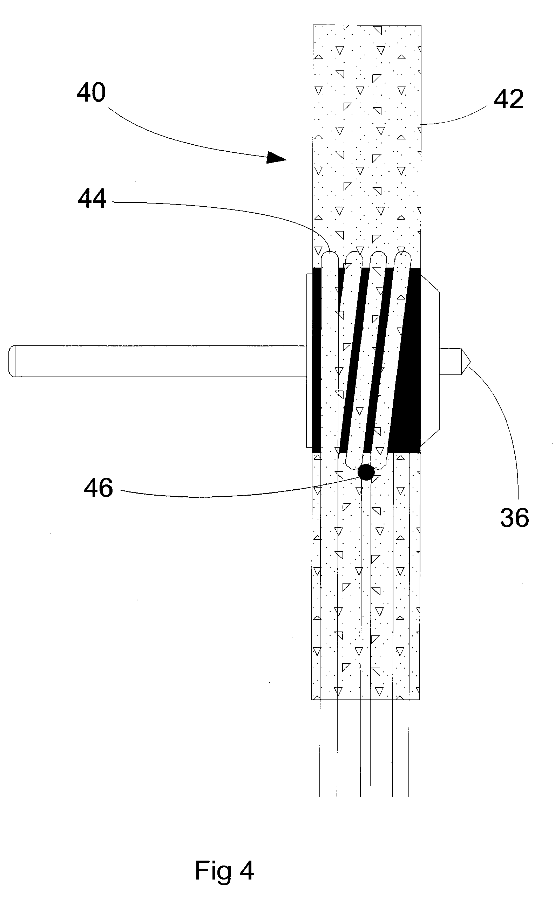

The probe assembly includes an elongate probe carrier 30 that extends from the pendulum 32 towards the sample 14. The probe carrier 30 has an end surface that faces towards the sample 14, and within a bore that extends to that end surface there is carried a test probe 36, shown in Figure 2. The test probe 36 and the associated assembly shown in Figure 4 is clamped in place in the bore by a radial screw 78. In this embodiment, the test probe is formed from diamond - a substance that has high heat conductivity, which makes control of its temperature a particularly difficult problem. However, other mineral, ceramic or metal probes could be used instead and these will also benefit from the advantages of the invention.

The probe carrier 30 extends through an aperture in the heat shield 22, such that the pendulum 32 is on the cold side and the test probe 36 is on the hot side of the heat shield 22. A heating assembly 40 is carried on the hot side of the heat shield 22 surrounding the probe carrier 30. The heating assembly 40 includes an annular ceramic carrier 42 within which is embedded an electrical resistive heating element 44 that closely surrounds the probe carrier 30 close to the end surface from which the probe projects. A thermocouple 46 is located within the ceramic carrier close to the heating element.

An opening 50 is formed through the heat shield 22 through which leads 52 that emerge from the heating element 44 and the thermocouple 46 can pass from the hot side to the cold side of the heat shield 22, where they are connected to a terminal block 54. A cover 56 is carried on the cold side of the heat shield to protect the leads 52. The terminal block 54 provides a connection for connection of the heating element 44 and the thermocouple 46 to a remote power supply unit 60 and a control unit 62. Although just one power supply unit 60 and a control unit 62 are shown in Figure 1, there are actually three of each of these, one for each heater.

A cooling assembly 70 is carried on the cold side of the heat shield 22 surrounding the probe carrier 30. The cooling assembly comprises a water duct 72 that is attached to the cold side of the heat shield by aluminium-filled epoxy 74. Cold water is passed through the duct 72 at all times before and during testing to cool the heat shield 22 and the probe carrier 30. This prevents overheating of the heat shield and limits the amount of heat that is conducted along the probe carrier 30 to the pendulum 32 and other components.

In this embodiment, the sample is heated by two sets of heating elements 16, 18. A flat heating element 18 heats a surface of the sample that faces away from the probe carrier 30 and a tubular heating element 16 surrounds the sample. The flat heating element 18 alone can provide adequate temperature control for thin samples. For larger samples, the tubular heating element 16 within the thermal enclosure 20 creates a closed but variable isothermal volume within the void of the thermal enclosure 20 allowing specimens of arbitrary thickness to be tested.

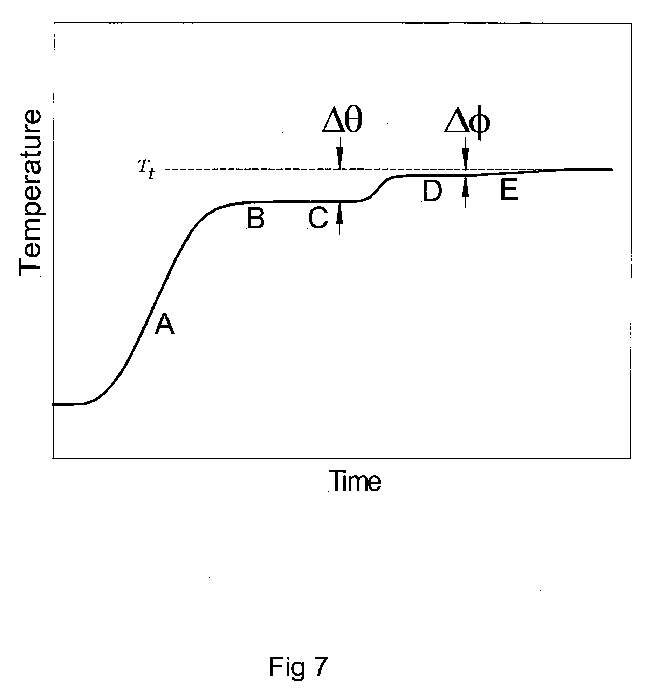

Operation of the embodiment will now be described with reference to Figure 7.

In preparation, the probe 36 and the sample 14 are mounted in the apparatus as is conventional. The thermal enclosure 20 is then moved into contact with the hot side of the heat shield 22 by means of an XYZ stage assembly. Water flow is fed to the duct 72.

The control unit 62 then causes the power supplies (for example 60) to direct electrical power to be applied to the heating elements 16, 18, 44. At this stage, the power is supplied at any 'safe' rate, as defined by the capacity of the elements or the power supply or the requirement to heat a particular sample or its adhesive at a defined rate. As indicated at A in Figure 7, the temperature is typically ramped up rapidly towards the target temperature *Tₜ.*

At the phase shown at **B** in Figure 7, each temperature controller is automatically tuned at temperature and the PID control parameters are optimised. At this stage, the aim is to determine the PID parameters which will produce (1) a stable temperature at the controller setpoint, (2) minimum undershoot or overshoot during temperature correction, and (3) rapid correction of the temperature after departure from the setpoint value. Then, at C, the temperature of the heating elements is stabilised.

Using a signal derived from a thermocouple (not shown) attached directly to the sample, the temperature difference Δθ between the actual sample temperature and the target temperature *Tₜ* is recorded. At **D** power supplied to the heating elements 16, 18, 44 is increased to aim to increase the actual temperature by Δθ. Finally, the power is slowly increased or decreased at **E** to reduce Δφ to zero and to stabilise the temperature at *Tₜ.*

Once a stable temperature has been obtained, the average power supplied to each of the heating elements 16, 18, 44 required to maintain the constant target temperature *Tₜ* is measured by the control unit. This data can be obtained by a computer from a suitable controller 62, and is averaged by the computer over a period of time, for example, over a minute or more. These constant power levels are then applied during use of the apparatus in testing, thus avoiding short-term cyclic effects that arise when using closed-loop control. It should be noted that advantage can be obtained by applying constant power to heating element(s) 44 associated with the probe only, but it may be preferred to use this type of control for heating elements 16, 18 associated with the sample 14 as well.

The entire apparatus is contained in a temperature-controlled housing such that its environment is maintained at as near as possible a constant temperature, preferably to within 0.1°C. This is necessary to ensure that the temperature of the probe will remain constant during the testing procedure.

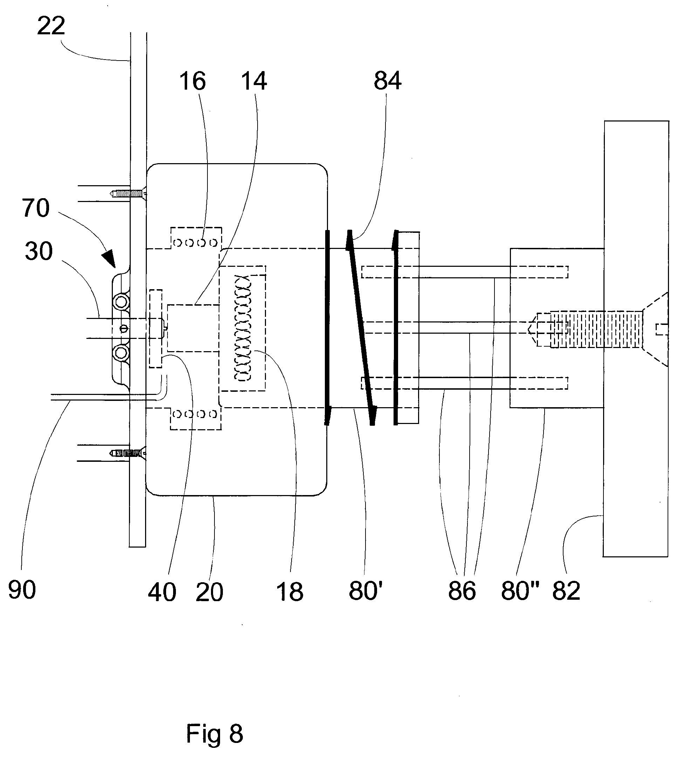

In the embodiment described above, the sample 14 and the thermal housing 20 are carried on a support 80 made of a temperature resistant and thermally insulating material, such as a ceramic. However, this may still result in conduction of an undesirable amount of heat to the mounting plate 82 and the stage. Therefore, in a modified embodiment, shown in Figure 8, the support is formed as two separate components 80', 80" interconnected by several stiff connecting members 86 of low thermal conductivity. Tubes of fused silica have been found to have advantageous properties for use as the connecting members because that material has low expansivity and low thermal conductivity, while having usefully high stiffness.

A further modification is shown in Figure 8. A tube 90 passes through the heat shield 22 from the cold side to he heated space that is enclosed by the thermal enclosure 20 and the hot side of the heat shield 22 where it ends close to the point of impact between the probe 36 and the sample 14. This serves as an inlet for inert purging gas to prevent oxidation of the sample 14 and/or of the probe 36 during prolonged tests and also permits experiments in different atmospheres. The aperture in the heat shield 22 through which the probe holder 30 passes provides the gas with an outlet. Alternatively, there may be a thin elastic membrane to form a seal between the heat shield 22 and the probe holder 30, and an additional passage through the shield to serve as a flow-controlled gas outlet.

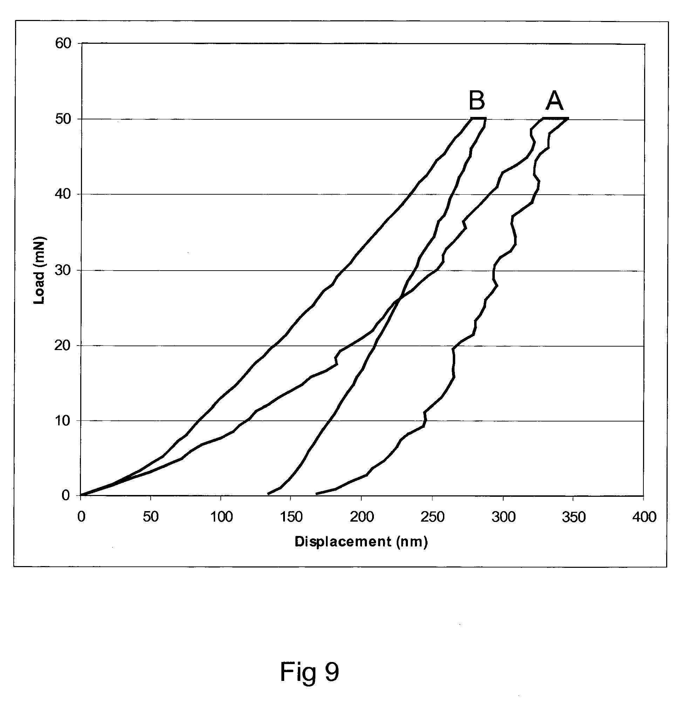

Typical results from conventional heated testing apparatus and apparatus embodying the invention are shown in Figure 9.

The traces that end at **A** in Figure 9 were obtained from conventional testing apparatus. During the test, the power supplied to the heater cycles up and down several times. This results in a trace that is uneven and not smooth. In comparison, the traces that end at **B,** performed on apparatus embodying the invention are smooth and continuous, representing the true progression of the indentation of the probe into the sample.

## Claims

1. A method of controlling the temperature of a probe (36) in materials testing apparatus, which apparatus includes heating elements (44) that can by supplied with energy to apply heat to the probe, the method comprising:
a) in a heating phase:
• using closed-loop temperature control to supply energy to the heating elements to heat the probe to a target temperature; and **characterised by**
• when the probe has reached the target temperature, determining the average power that is being supplied to the heating elements; and
b) in a temperature maintenance phase, during which testing is carried out:
• supplying to the heating elements a continuous constant source of energy at a power that is substantially equal to the determined average power to maintain the probe at the target temperature.

2. A method of controlling the temperature of a probe in materials testing apparatus according to claim 1 which, in the heating phase, the energy is supplied to the heating elements (44) at a high power level that is higher than the power required to maintain the probe (36) at the target temperature.

3. A method of controlling the temperature of a probe in materials testing apparatus according to claim 1 or claim 2 in which the heating phase operates using feedback from a signal derived from a temperature detector (46) to control power applied to the heating elements (44).

4. A method of controlling the temperature of a probe in materials testing apparatus according to any preceding claim in which the closed-loop temperature control method is on-off control, which operates in cycles in which energy is supplied to the heating elements until the probe reaches an upper threshold and energy is then removed from the elements until the probe cools to a lower threshold temperature.

5. A method of controlling the temperature of a probe in materials testing apparatus according to claim 4 in which the target temperature is between the lower and the upper threshold temperatures.

6. A method of controlling the temperature of a probe in materials testing apparatus according to any preceding claim in which a sample (14) is contained within a space (20) into which inert gas is introduced during testing.

7. A method of controlling the temperature of a probe in materials testing apparatus according to any preceding claim in which the target temperature is up to 1000°C

8. Materials testing apparatus having:
a probe (36) that can be pressed into a sample (14) under the influence of a controlled force;
measurement means operable to determine the depth to which the probe has indented the surface of a sample;
a heater (44) for heating the probe; and
a power supply (60) and control unit (62) operable to control operation of the heater; **characterised in that:**
the power supply (60) and control unit (62) operate:
in a heating phase under closed-loop control to bring the probe (36) to a target temperature and when the probe has reached the target temperature, to determine the average power that is being supplied to the heater, and
in a temperature maintenance phase to supply continuous constant power, substantially equal to the determined average power, to the heater to maintain the probe at the target temperature.

9. Materials testing apparatus according to claim 8 which further includes a resistive heating coil (44) disposed to apply heat to the probe.

10. Materials testing apparatus according to claim 9 or claim 10 having a resistive heating coil (16, 18) disposed to apply heat to the sample (14).

11. Materials testing apparatus according to claim 10 in which the resistive heating coil (16, 18) disposed to apply heat to the sample is carried within a thermal enclosure (20) that can enclose a sample (14) that is being tested.

12. Materials testing apparatus according to claim 11 having a duct (90) that passes into the thermal enclosure (20) through which gas can be introduced into the thermal enclosure during operation of the apparatus.

13. Materials testing apparatus according to any one of claims 8 to 12 having a support (80) upon which a sample to be tested can be carried, the support being formed from a body of insulating material.

14. Materials testing apparatus according to claim 13 in which the support is held by insulating members (86) of fused silica.

15. Materials testing apparatus according to any one of claims 8 to 14 further including cooling means (70) disposed to resist transfer of heat from the probe to other parts of the apparatus, the cooling means including a duct (72) through which cooling fluid can flow to remove heat from the apparatus.

## Patentansprüche

1. Verfahren zur Regelung der Temperatur einer Sonde (36) in einer Materialprüfvorrichtung, wobei die Vorrichtung Heizelemente (44) umfasst, die mit Energie versorgt werden können, um der Sonde Wärme zuzuführen, wobei das Verfahren umfasst:
a) in einer Heizphase:
• Verwenden von Temperaturregelung mit Rückführung, um die Heizelemente mit Energie zu versorgen, um die Sonde auf eine Zieltemperatur zu erwärmen; und **gekennzeichnet durch**
• Bestimmen, wenn die Sonde die Zieltemperatur erreicht hat, der mittleren Leistung, die den Heizelementen zugeführt wird; und
b) in einer Temperaturhaltephase, während der die Prüfung durchgeführt wird:
• Versorgen der Heizelemente mit einer kontinuierlichen konstanten Quelle von Energie bei einer Leistung, die im Wesentlichen gleich der mittleren Leistung ist, um die Sonde auf der Zieltemperatur zu halten.

2. Verfahren zur Regelung der Temperatur einer Sonde in einer Materialprüfvorrichtung nach Anspruch 1, wobei die Energie den Heizelementen (44) in der Heizphase bei einem hohen Leistungspegel zugeführt wird, der höher als die Leistung ist, die zum Halten der Sonde (36) auf der Zieltemperatur erforderlich ist.

3. Verfahren zur Regelung der Temperatur einer Sonde in einer Materialprüfvorrichtung nach Anspruch 1 oder 2, wobei die Heizphase unter Verwendung von Rückführung von einem Signal funktioniert, das von einem Temperaturdetektor (46) abgleitet ist, um die Leistung zu regeln, die den Heizelementen (44) zugeführt wird.

4. Verfahren zur Regelung der Temperatur einer Sonde in einer Materialprüfvorrichtung nach einem der vorhergehenden Ansprüche, wobei das Verfahren zur Temperaturregelung mit Rückführung eine Ein-/Aus-Regelung ist, welche in Zyklen funktioniert, in welchen den Heizelementen Energie zugeführt wird, bis die Sonde eine obere Schwelle erreicht, und den Elementen Energie entzogen wird, bis die Probe auf eine untere Schwellentemperatur abkühlt.

5. Verfahren zur Regelung der Temperatur einer Sonde in einer Materialprüfvorrichtung nach Anspruch 4, wobei die Zieltemperatur zwischen den unteren und den oberen Schwellentemperaturen ist.

6. Verfahren zur Regelung der Temperatur einer Sonde in einer Materialprüfvorrichtung nach einem der vorhergehenden Ansprüche, wobei eine Probe (14) innerhalb eines Raums (20) enthalten ist, in welchen während der Prüfung inertes Gas eingeführt wird.

7. Verfahren zur Regelung der Temperatur einer Sonde in einer Materialprüfvorrichtung nach einem der vorhergehenden Ansprüche, wobei die Zieltemperatur bis zu 1000 °C beträgt.

8. Materialprüfvorrichtung, aufweisend:
eine Sonde (36), die unter dem Einfluss einer kontrollierten Kraft in eine Probe (14) gedrückt werden kann;
Messmittel, die so betrieben werden können, dass sie die Tiefe messen, bis zu welcher die Sonde die Oberfläche einer Probe eingedrückt hat;
eine Heizvorrichtung (44) zum Erwärmen der Probe; und
eine Leistungsversorgung (60) und eine Steuereinheit (62), die so betrieben werden können, dass sie den Betrieb des Heizvorrichtung steuern; **dadurch gekennzeichnet, dass**:
die Leistungsversorgung (60) und die Steuereinheit (62) so funktionieren, dass sie:
die Sonde (36) in einer Heizphase unter Regelung mit Rückführung auf eine Zieltemperatur bringen und, wenn die Sonde die Zieltemperatur erreicht hat, die mittlere Leistung bestimmen, die der Heizvorrichtung zugeführt wird, und
der Heizvorrichtung in einer Temperaturhaltephase kontinuierliche konstante Leistung, die im Wesentlichen gleich der bestimmten mittleren Leistung ist, zuführen, um die Sonde auf der Zieltemperatur zu halten.

9. Materialprüfvorrichtung nach Anspruch 8, welche ferner eine Widerstandsheizspule (44) umfasst, die so eingerichtet ist, dass sie der Sonde Wärme zuführt.

10. Materialprüfvorrichtung nach Anspruch 9 oder 10 mit einer Widerstandsheizspule (16, 18), die so eingerichtet ist, dass sie der Probe (14) Wärme zuführt.

11. Materialprüfvorrichtung nach Anspruch 10, wobei die Widerstandsheizspule (16, 18), die so eingerichtet ist, dass sie der Probe Wärme zuführt, innerhalb einer thermischen Einfassung (20) aufgenommen ist, die eine Probe (14) einfassen kann, die geprüft wird.

12. Materialprüfvorrichtung nach Anspruch 11 mit einer Leitung (90), welche in die thermische Einfassung (20) eintritt und durch welche während des Betriebs der Vorrichtung Gas in die thermische Einfassung eingeführt werden kann.

13. Materialprüfvorrichtung nach einem der Ansprüche 8 bis 12 mit einen Träger (80), auf welchem eine zu prüfende Probe getragen werden kann, wobei der Träger aus einem Körper aus Isoliermaterial gebildet ist.

14. Materialprüfvorrichtung nach Anspruch 13, wobei der Träger durch Isolierelemente (86) aus Quarzglas gehalten wird.

15. Materialprüfvorrichtung nach einem der Ansprüche 8 bis 14, ferner umfassend Kühlmittel (70), die so eingerichtet sind, dass sie sich der Übertragung von Wärme von der Sonde auf andere Teile der Vorrichtung widersetzen, wobei die Kühlmittel eine Leitung (72) umfassen, durch welche Kühlfluid strömen kann, um der Vorrichtung Wärme zu entziehen.

## Revendications

1. Procédé de régulation de la température d'une sonde (36) dans un appareil d'essai de matériaux, lequel appareil comprend des éléments chauffants (44) pouvant être alimentés en énergie afin d'appliquer de la chaleur à la sonde, le procédé comprenant les étapes suivantes :
a) en phase de chauffage :
• utilisation d'une régulation de température en boucle fermée pour fournir de l'énergie aux éléments chauffants et chauffer la sonde à une température cible ; et **caractérisée par** l'étape suivante
• lorsque la sonde atteint la température cible, détermination de la puissance moyenne fournie aux éléments chauffants ; et
b) en phase de maintien de température, durant laquelle les essais sont réalisés :
• fourniture aux éléments chauffants d'une source d'énergie constante et continue, à une puissance essentiellement égale à la puissance moyenne déterminée, afin de maintenir la sonde à la température cible.

2. Procédé de régulation de la température d'une sonde dans un appareil d'essai de matériaux selon la revendication 1, dans lequel, en phase de chauffage, l'énergie est fournie aux éléments chauffants (44) à un niveau de puissance élevé, supérieur à la puissance requise pour maintenir la sonde (36) à la température cible.

3. Procédé de régulation de la température d'une sonde dans un appareil d'essai de matériaux selon la revendication 1 ou 2, dans lequel la phase de chauffage utilise un retour d'un signal dérivé d'un capteur de température (46) pour réguler la puissance appliquée aux éléments chauffants (44).

4. Procédé de régulation de la température d'une sonde dans un appareil d'essai de matériaux selon l'une quelconque des revendications précédentes, dans lequel le procédé de régulation de température en boucle fermée est une régulation par tout ou rien qui fonctionne par cycles, dans lequel l'énergie est fournie aux éléments chauffants jusqu'à ce que la sonde atteigne une valeur seuil supérieure, puis l'énergie est coupée au niveau des éléments jusqu'à ce que la sonde refroidisse à une température de seuil inférieur.

5. Procédé de régulation de la température d'une sonde dans un appareil d'essai de matériaux selon la revendication 4, dans lequel la température cible est comprise entre les températures de seuil supérieur et inférieur.

6. Procédé de régulation de la température d'une sonde dans un appareil d'essai de matériaux selon l'une quelconque des revendications précédentes, dans lequel un échantillon (14) est contenu dans un espace (20) dans lequel du gaz inerte est introduit pendant les essais.

7. Procédé de régulation de la température d'une sonde dans un appareil d'essai de matériaux selon l'une quelconque des revendications précédentes, dans lequel la température cible peut atteindre 1000 °C.

8. Appareil d'essai de matériaux comprenant :
une sonde (36) pouvant être enfoncée dans un échantillon (14) sous l'influence d'une force contrôlée ;
un dispositif de mesure pouvant déterminer la profondeur à laquelle la sonde s'enfonce dans la surface d'un échantillon ;
un élément chauffant (44) permettant de chauffer la sonde ; et
une alimentation électrique (60) et une unité de commande (62) pouvant commander le fonctionnement de l'élément chauffant ; **caractérisé en ce que** :
l'alimentation électrique (60) et l'unité de commande (62) servent :
en phase de chauffage, lors d'une régulation en boucle fermée, à amener la sonde (36) à une température cible, et, lorsque la sonde atteint la température cible, à déterminer la puissance moyenne fournie à l'élément chauffant, et
en phase de maintien de température, à fournir à l'élément chauffant une alimentation constante et continue, essentiellement égale à la puissance moyenne déterminée, afin de maintenir la sonde à la température cible.

9. Appareil d'essai de matériaux selon la revendication 8, comprenant en outre une bobine de chauffage à résistance (44) permettant d'appliquer de la chaleur à la sonde.

10. Appareil d'essai de matériaux selon la revendication 9 ou 10, comprenant une bobine de chauffage à résistance (16, 18) permettant d'appliquer de la chaleur à l'échantillon (14).

11. Appareil d'essai de matériaux selon la revendication 10, dans lequel la bobine de chauffage à résistance (16, 18) permettant d'appliquer de la chaleur à l'échantillon est soutenue dans une enceinte thermique (20) pouvant intégrer un échantillon (14) à tester.

12. Appareil d'essai de matériaux selon la revendication 11, comprenant une conduite (90) traversant l'enceinte thermique (20), par laquelle du gaz peut être introduit dans l'enceinte thermique pendant le fonctionnement de l'appareil.

13. Appareil d'essai de matériaux selon l'une quelconque des revendications 8 à 12, comprenant un support (80) sur lequel un échantillon peut être testé, le support étant formé à partir d'un corps de matériau isolant.

14. Appareil d'essai de matériaux selon la revendication 13, dans lequel le support est maintenu par des éléments isolants (86) en silice fondue.

15. Appareil d'essai de matériaux selon l'une quelconque des revendications 8 à 14, comprenant en outre un dispositif de refroidissement (70) pouvant résister au transfert de chaleur entre la sonde et d'autres parties de l'appareil, le dispositif de refroidissement comprenant une conduite (72) par laquelle un liquide de refroidissement peut s'écouler pour éliminer la chaleur dans l'appareil.
